Europäisches Patentamt

European Patent Office

Office européen des brevets

(11) Numéro de publication: **0 391 777**

**A1**

(12) **DEMANDE DE BREVET EUROPEEN**

(21) Numéro de dépôt: 90400883.6

(51) Int. Cl.5: **B23P 19/02**

(22) Date de dépôt: 30.03.90

(30) Priorité: 04.04.89 FR 8904418

(43) Date de publication de la demande:
**10.10.90 Bulletin 90/41**

(84) Etats contractants désignés:
**BE CH DE ES LI SE**

(71) Demandeur: **FRAMATOME**
**Tour Fiat 1, Place de la Coupole**
**F-92400 Courbevoie(FR)**

(72) Inventeur: **Grypczynski, Daniel**
**4 rue St Nestor**
**F-69008 Lyon(FR)**
Inventeur: **Jacquier, Paul**
**37 Rue Chemin des Bruyères**
**F-69160 Tassin La Demi-Lune(FR)**
Inventeur: **Guglielmo, André**
**45 avenue Marc Sangnier**
**F-69100 Villeurbanne(FR)**

(74) Mandataire: **Bouget, Lucien et al**
**Cabinet Lavoix 2, Place d'Estienne d'Orves**
**F-75441 Paris Cédex 09(FR)**

(54) **Procédé et dispositifs d'extraction d'un bouchon d'obturation d'un tube de générateur de vapeur.**

(57) On effectue un réalésage du corps (4) du bouchon (3) en direction de son fond (6) et un perçage de la noix de serrage (7), par procédé d'usinage électrique, sur une partie substantielle de la longueur du bouchon. On réalise le détensionnement de la paroi du corps (4) du bouchon à l'aide d'une torche de soudage introduite dans l'alésage réalisé par usinage électrique et on introduit un outil de préhension dans l'alésage pour extraire du tube le corps (4) du bouchon détensionné. L'invention est également relative aux dispositifs permettant de réaliser l'extraction par le procédé suivant l'invention.

FIG. 2

L'invention concerne un procédé d'extraction d'un bouchon d'obturation d'un tube d'un générateur de vapeur ainsi que des dispositifs pour la mise en oeuvre de ce procédé.

Les générateurs de vapeur des réacteurs nucléaires à eau sous pression comportent une enveloppe de forme générale cylindrique à l'intérieur de laquelle une boîte à eau est délimitée par une plaque tubulaire de forte épaisseur sur laquelle est fixé le faisceau de tubes du générateur de vapeur. Chacun des tubes du faisceau comporte deux branches rectilignes parallèles dont les parties d'extrémité sont fixées à l'intérieur de la plaque tubulaire, généralement par dudgeonnage et par soudage.

Dans le générateur de vapeur en service, les tubes sont en contact à la fois avec le fluide primaire du réacteur nucléaire constitué par de l'eau sous pression et avec le fluide secondaire constitué par de l'eau d'alimentation qui se vaporise. Dans les conditions d'exploitation du générateur de vapeur, les tubes sont susceptibles de subir diverses dégradations et en particulier une corrosion par les fluides avec lesquels ils sont en contact. Certains tubes du générateur de vapeur peuvent devenir défectueux en service et présenter par exemple des fissures génératrices de fuite entraînant une contamination du fluide secondaire.

Il est donc nécessaire, pendant les périodes d'entretien du réacteur, d'intervenir sur le générateur de vapeur et d'effectuer le bouchage des tubes présentant des dégradations susceptibles d'entraîner des fuites.

On connaît différents procédés et dispositifs permettant de placer un bouchon dans la partie d'extrémité d'un tube de générateur de vapeur, depuis la boîte à eau de ce générateur de vapeur.

On utilise en particulier des bouchons d'obturation comportant un corps tubulaire fermé à l'une de ses extrémités par un fond et présentant sur sa surface externe, des cannelures en saillie vers l'extérieur favorisant l'accrochage du bouchon à l'intérieur du tube dont on veut assurer la fermeture étanche. Le bouchon dont le diamètre extérieur maximal est un peu inférieur au diamètre interne du tube est introduit par l'extrémité du tube affleurant la face d'entrée de la plaque tubulaire.

Une noix de serrage insérée dans le corps du bouchon est déplacée par poussée ou par traction à l'intérieur du corps en place dans le tube, de manière à réaliser l'expansion diamétrale de ce corps. On réalise ainsi l'application étanche de la surface externe du bouchon comportant les cannelures sur la surface interne du tube, de manière à réaliser à la fois le blocage du bouchon et la fermeture étanche du tube. La noix de serrage et l'alésage interne du bouchon présentent généralement des formes tronconiques correspondantes permettant l'expansion diamétrale du corps du bouchon.

Ce type de bouchon est généralement désigné sous l'appellation de bouchon mécanique, par opposition au bouchon dont le serrage est réalisé au moins partiellement par d'autres moyens qu'une noix à déplacement axial dans l'alésage du corps.

Dans le cas des bouchons mécaniques, la noix de serrage reste en place à l'intérieur du corps, pour assurer le blocage du bouchon.

Dans certains cas, il peut être nécessaire d'effectuer le démontage d'un bouchon mis en place dans un tube de générateur de vapeur.

Les tubes qui sont situés à la partie centrale du faisceau présentent une partie cintrée reliant leurs deux branches rectilignes à faible rayon de courbure. Les parties à faible rayon de courbure appelées petits cintres rendent les tubes correspondants particulièrement sensibles à la corrosion à cause de la présence d'une concentration de contraintes relativement fortes dans la partie cintrée.

On a donc effectué, à titre préventif, des campagnes de bouchage des tubes de la partie centrale du faisceau sur certains générateurs de vapeur.

Depuis, des procédés et dispositifs de détensionnement efficaces des petits cintres ont été mis au point et il est devenu possible de remettre en service des tubes dont on avait effectué le bouchage préventif.

De plus, on connaît également des procédés de réparation efficaces des tubes qui permettent de remettre en fonctionnement, après réparation, des tubes dont on avait effectué le bouchage.

Il est donc souhaitable de disposer de procédés et de dispositifs permettant d'assurer l'extraction de bouchons mis en place dans des tubes de générateur de vapeur.

On a proposé, par exemple, de réaliser un allongement du corps du bouchon, de manière à réduire son diamètre extérieur par striction, pour permettre l'extraction ultérieure du bouchon. Cet allongement du corps du bouchon peut être obtenu par poussée sur le fond de fermeture du corps, par exemple par l'intermédiaire de la noix de serrage comportant à sa partie centrale un trou taraudé dans lequel on engage une tige filetée. La tige filetée est elle-même reliée à un dispositif de poussée tel qu'un vérin.

L'inconvénient de ce procédé est qu'il peut conduire à une rupture du corps tubulaire du bouchon, ce qui entraîne des opérations d'usinage complémentaires avec pour conséquence l'augmentation des doses d'irradiation du personnel devant assurer ces opérations d'usinage.

On a songé également à réduire l'épaisseur de la paroi du corps du bouchon, par perçage à un diamètre voulu, en utilisant un foret. Cependant, le perçage ne peut pas être effectué jusqu'à une zone voisine du fond du bouchon car la noix de serrage est entraînée en rotation sous l'effet du couple exercé par le foret.

En conséquence, il n'est pas possible d'obtenir par cette méthode, un desserrage efficace du bouchon et son extraction s'accompagne de dégradations subies par la paroi interne du tube.

Le but de l'invention est donc de proposer un procédé d'extraction d'un bouchon d'obturation d'un tube d'un générateur de vapeur comportant un corps tubulaire fermé à l'une de ses extrémités par un fond et une noix de serrage insérable dans le corps de manière à réaliser l'expansion diamétrale de ce corps à l'intérieur du tube et son application étanche sur la paroi interne du tube, la noix de serrage restant en place dans le corps du bouchon en position de service, ce procédé permettant une extraction du bouchon sans endommager le tube et sans risque de rupture du corps du bouchon à l'intérieur du tube.

Dans ce but :
- on effectue un réalésage du corps du bouchon en direction de son fond au moins jusqu'à une zone d'expansion du bouchon munie de moyens d'ancrage et un perçage de la noix de serrage par usinage électrique, sur une partie substantielle de la longueur du bouchon,
- on réalise le détensionnement de la paroi du corps du bouchon à l'aide d'une torche de soudage,
- et on introduit un outil de préhension dans l'alésage réalisé par usinage électrique pour extraire du tube le corps du bouchon détensionné.

L'invention est également relative à des dispositifs permettant de réaliser les différentes étapes du procédé d'extraction suivant l'invention.

Afin de bien faire comprendre l'invention, on va maintenant décrire, à titre d'exemple non limitatif, en se référant aux figures jointes en annexe, un mode de mise en oeuvre du procédé suivant l'invention et les dispositifs utilisés pour cette mise en oeuvre.

La figure 1 est une vue en coupe axiale d'un bouchon en position d'obturation à l'intérieur d'un tube de générateur de vapeur.

La figure 2 est une vue en coupe du bouchon représenté sur la figure 1 montrant le résultat de l'opération de réalésage en traits mixtes.

La figure 3 est une vue en coupe du bouchon avant la phase de détensionnement.

La figure 4 est une vue en élévation avec coupe partielle du dispositif de réalésage et de perçage par étincelage.

La figure 5 est une vue en élévation avec coupe partielle du dispositif de détensionnement.

La figure 5A est une vue suivant A-A de la figure 5.

La figure 6 est une vue en élévation avec coupe partielle du dispositif d'extraction.

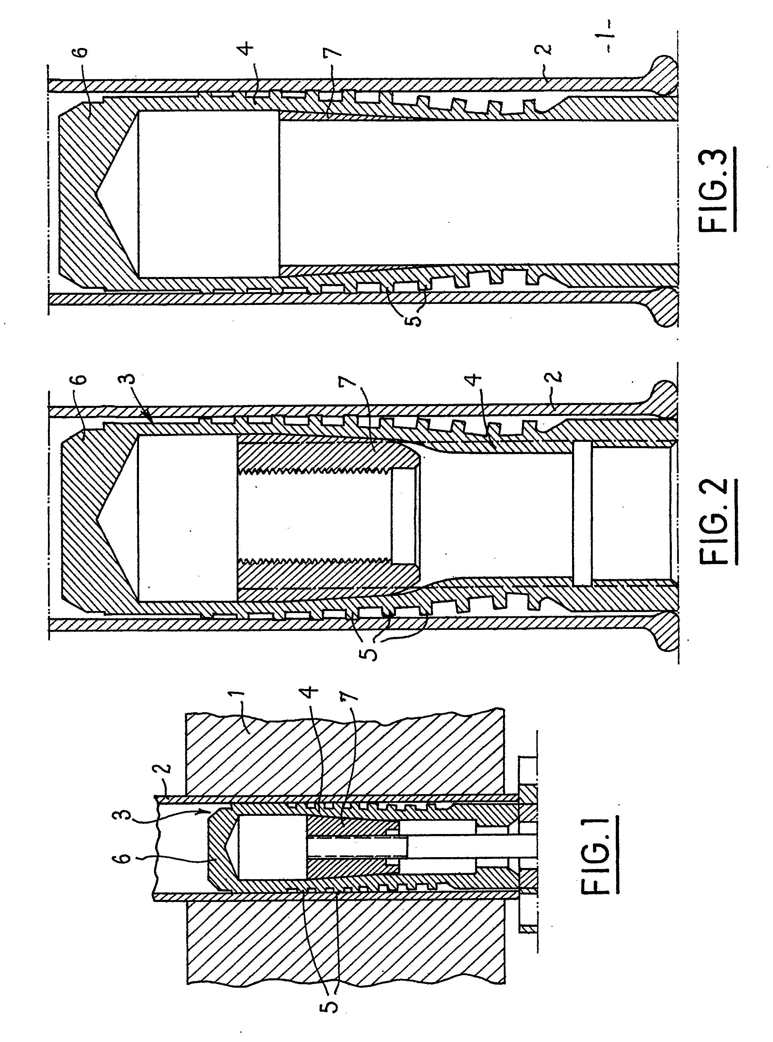

Sur la figure 1, on voit la plaque tubulaire 1 d'un générateur de vapeur, au niveau d'un trou de traversée de cette plaque dans lequel est serti un tube 2 du générateur de vapeur. Un bouchon 3 a été mis en place dans le tube 2 pour réaliser l'obturation de ce tube. Le bouchon 3 comporte un corps tubulaire 4 dont la surface extérieure présente des cannelures annulaires 5 en saillie vers l'extérieur et un fond de fermeture 6 à son extrémité. Une noix de serrage 7 est engagée à l'intérieur de l'alésage du corps tubulaire 4 dont elle assure l'expansion radiale à l'intérieur du tube 2.

Les cannelures 5 sont alors maintenues avec une forte pression de contact contre la surface intérieure du tube 2 et assurent à la fois le blocage du bouchon dans le tube et la fermeture étanche du tube.

Le blocage du bouchon à l'intérieur du tube est réalisé à la fois par les tensions créées dans la paroi du bouchon lors de sa déformation à l'intérieur du tube et par la présence de la noix de serrage 7.

Pour réaliser le détensionnement de la paroi tubulaire du bouchon 4, sur une partie substantielle de sa longueur, il est nécessaire de réaliser un chauffage intense de cette paroi, par exemple grâce à une torche de soudage, jusque dans une zone proche du fond 6 du bouchon dans laquelle le bouchon est accroché par les cannelures.

Il est bien évident que la noix, et dans une certaine mesure, la partie inférieure de la paroi du bouchon qui a subi un certain rétreint ne permettent pas d'accéder facilement à la paroi du bouchon dans sa zone expansée à l'intérieur du tube 2, pour en réaliser le détensionnement.

Sur la figure 2, on a représenté en traits mixtes les parties du corps tubulaire 4 du bouchon et de la noix de serrage 7 dont on réalise la suppression par réalésage et par perçage, selon le procédé de l'invention.

Cette opération préalable permet d'accéder ensuite à la partie du bouchon ayant subi l'expansion et dans laquelle on effectue un détensionnement préalablement à l'extraction du bouchon.

Sur la figure 3, on a représenté le bouchon dans son état permettant son détensionnement puis son extraction.

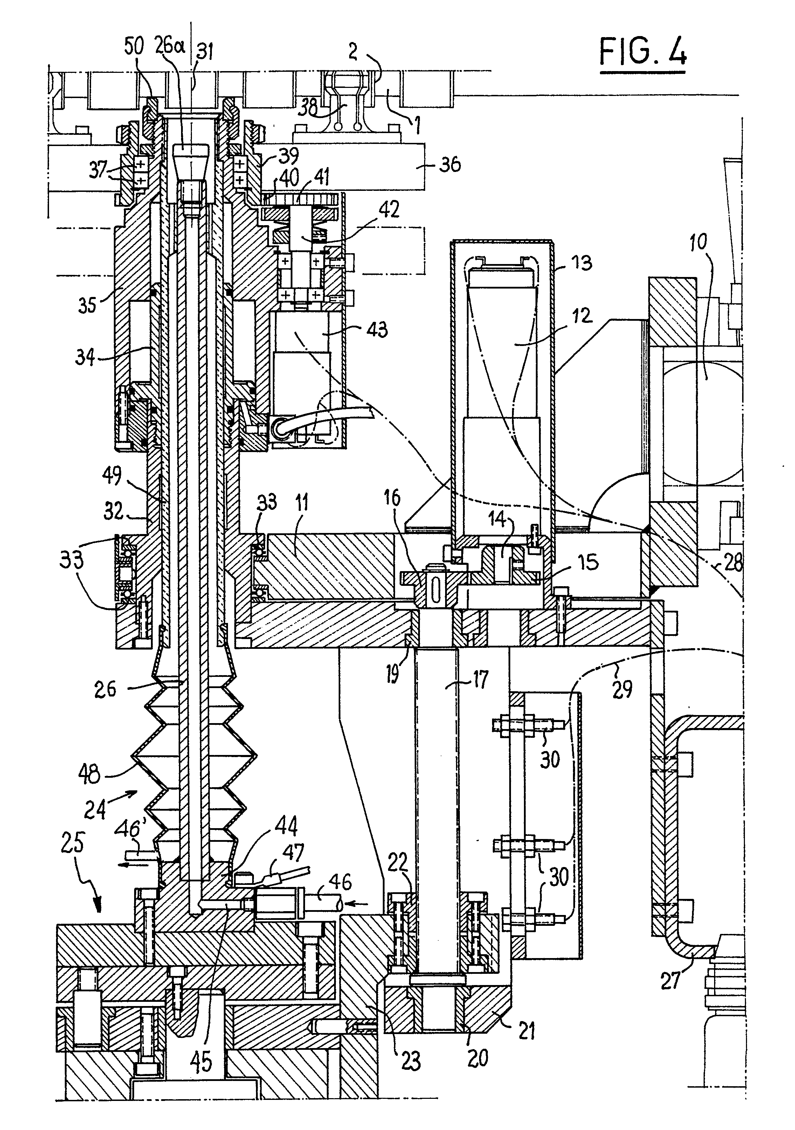

Sur la figure 4, on a représenté un dispositif permettant d'effectuer le réalésage et le perçage d'un bouchon de fermeture d'un tube de générateur de vapeur par étincelage.

Ce dispositif est fixé à l'extrémité d'un bras 10 permettant de le déplacer à l'intérieur de la boîte à eau du générateur de vapeur, de manière à présenter l'outil d'usinage par étincelage, dans le prolongement des tubes comportant un bouchon dont on veut effectuer l'extraction.

Un tel bras de déplacement d'un outillage sous la plaque tubulaire d'un générateur de vapeur est bien connu et ne sera pas décrit en détail.

Sur le bras 10 est fixé un support 11 portant un moteur électrique 12 fixé dans un carter 13. L'arbre de sortie 14 du moteur 12 est solidaire d'un engrenage 15 entraînant un second engrenage 16 lui-même solidaire de l'extrémité d'une tige filetée 17 montée rotative grâce à des paliers 19 et 20 sur le support 11 et sur un second support 21 également solidaire du bras 10, par l'intermédiaire du support 11.

Un écrou 22 est engagé sur la tige filetée 17 et monté solidaire de la partie inférieure de l'outil d'étincelage désigné de manière générale par le repère 24, par l'intermédiaire d'un support 23 sur lequel est fixé le vibreur 25 de l'outil d'étincelage.

Le vibreur 25 est constitué par une plaque en fer doux reliée à l'électrode 26 de l'outil 24 et montée entre deux ventouses électromagnétiques permettant la mise en vibration dans la direction axiale, de la plaque en fer doux et de l'électrode 26 de l'outil d'étincelage.

Le support 11 et le support 21 solidaires du bras 10 portent également un ensemble 27 assurant le passage des câbles d'alimentation 28 du moteur 12 et des câbles de commande 29 des déplacements dans la direction axiale de l'outillage 24 reliés à des détecteurs de position 30.

La mise en rotation du moteur 12 permet de réaliser l'avance de l'outil d'étincelage, dans la direction axiale 31 du tube dans lequel se trouve le bouchon à extraire, par l'intermédiaire de la tige filetée 17 et de l'écrou 22.

La course totale dans la direction axiale du dispositif de déplacement permet de réaliser la mise en place de l'extrémité de l'électrode 26 dans la zone à usiner du bouchon et le déplacement pour réaliser l'alésage et le perçage du bouchon, par étincelage.

Un fût 32 est monté à l'extrémité du support 11, par l'intermédiaire de paliers et de butées à billes 33. Un piston 34 est solidaire de la partie supérieure du fût 32 et un ensemble 35 constituant un cylindre pour le piston 34 est monté autour du fut 32 et du piston 34. Cet ensemble porte un plateau de centrage 36, par l'intermédiaire de paliers à billes 37 de manière que le plateau 36 soit rotatif par rapport à l'ensemble 35, autour de l'axe longitudinal de l'électrode 26.

Des pinces 38 de type connu à expansion radiale sont fixées sur le plateau de centrage 36. Chacune des pinces 38 comporte un dispositif de commande permettant son expansion radiale après introduction dans un tube 2 du générateur de vapeur.

Le plateau 36 comporte également un équipage 39 à sa partie centrale montée sur les paliers 37. Cet équipage 39 est usiné sur sa surface extérieure pour constituer une denture 40 engrènant avec une roue dentée 41 solidaire d'un axe 42 relié à l'axe de sortie d'un moteur 43. On peut ainsi obtenir la rotation sur 360° du plateau porte-pince 39 pour réaliser la mise en place des pinces 38 dans des tubes 2 du faisceau autour du tube dans lequel on réalise le perçage du bouchon par étincelage.

On peut ainsi obtenir, par mise en place et serrage des pinces 38 dans des tubes 2 du générateur de vapeur, un alignement parfait de l'axe de l'électrode 26 avec l'axe 31 du tube et du bouchon dont on réalise le perçage.

Par alimentation de la chambre du vérin comportant le piston 34 monté dans la chambre délimitée dans l'ensemble 35, on provoque la descente de l'ensemble 35, du plateau 36 et des pinces 38, pour assurer leur extraction du tube.

L'électrode 26 comporte un corps tubulaire de grande longueur relié à sa partie inférieure à une pièce 44 fixée sur le vibreur 25 dans laquelle l'élément tubulaire est mis en communication avec un canal d'injection d'eau 45 relié à une conduite d'alimentation 46. L'eau est récupérée par la conduite 46' reliée au soufflet 48. La pièce 44 permet également de réaliser l'alimentation électrique de l'électrode grâce à un contact 47 relié à un conducteur de grande section.

La partie supérieure 26a de l'électrode 26 constituant la partie d'usinage proprement dite de l'électrode comporte des canaux inclinés par rapport à l'axe de l'électrode pour le passage de l'eau. Le diamètre de cette partie supérieure 26a correspond au diamètre de l'alésage qui sera effectué dans le bouchon.

Un soufflet 48 est relié d'une part à la pièce de contact 44 et d'autre part à une pièce tubulaire isolante 49 entourant la partie tubulaire de l'électrode 26.

Pour la mise en oeuvre du dispositif représenté sur la figure 4 afin de réaliser l'alésage et le perçage d'un bouchon tel que représenté sur la figure 2, on met en place l'outillage dans sa position représentée sur la figure 4, grâce au bras 10, de manière que les pinces 36 du plateau de centrage 36 soit engagées dans des tubes 2 voisins du tube dans lequel on réalise le perçage du bouchon. Une butée 50 solidaire de la partie supérieure de l'ensemble 35 vient alors en contact avec la face d'entrée de la plaque tubulaire 1, de manière à réaliser l' étanchéité de l'outillage.

On réalise alors l'expansion diamétrale des pinces 38 à l'intérieur des tubes 2, ce qui permet d'assurer un centrage parfait de l'électrode par rapport au bouchon à percer et de mettre en alignement l'axe de l'électrode et l'axe du tube correspondant à l'axe du bouchon à percer.

La mise en place de l'électrode en position d'usinage et l'avance pendant l'usinage sont réalisées grâce au moteur 12 entraînant la tige filetée 17 et l'écrou 22. Le vibreur est mis en fonctionnement et de l'eau est amenée dans la zone d'usinage. L'électrode est alimentée en courant électrique par le contact 47.

Pendant l'usinage, les particules de métal de petites dimensions détachées du bouchon sous l'effet de l'étincelage sont récupérées dans l'eau à l'intérieur du soufflet 48 par la conduite 46', cette eau étant filtrée et refroidie en sortie de la conduite 46'.

On peut ainsi obtenir un réalésage de la partie rétreinte du corps du bouchon et un perçage de la noix de serrage de ce bouchon, sans exercer de couple susceptible d'entraîner la noix en rotation à l'intérieur du corps du bouchon.

Le perçage par étincelage est poursuivi jusqu'au moment où l'électrode parvient au voisinage du fond du bouchon.

Dans certains cas, il est possible de réaliser également le perçage du fond du bouchon, ce qui permet d'introduire un outil d'extraction à travers le fond du bouchon, comme il sera expliqué plus loin.

Le centrage parfait de l'électrode d'étincelage permet de réaléser la partie rétreinte du corps 4 du bouchon, comme il est visible sur la figure 2, sans percer ou découper la paroi de cette partie rétreinte.

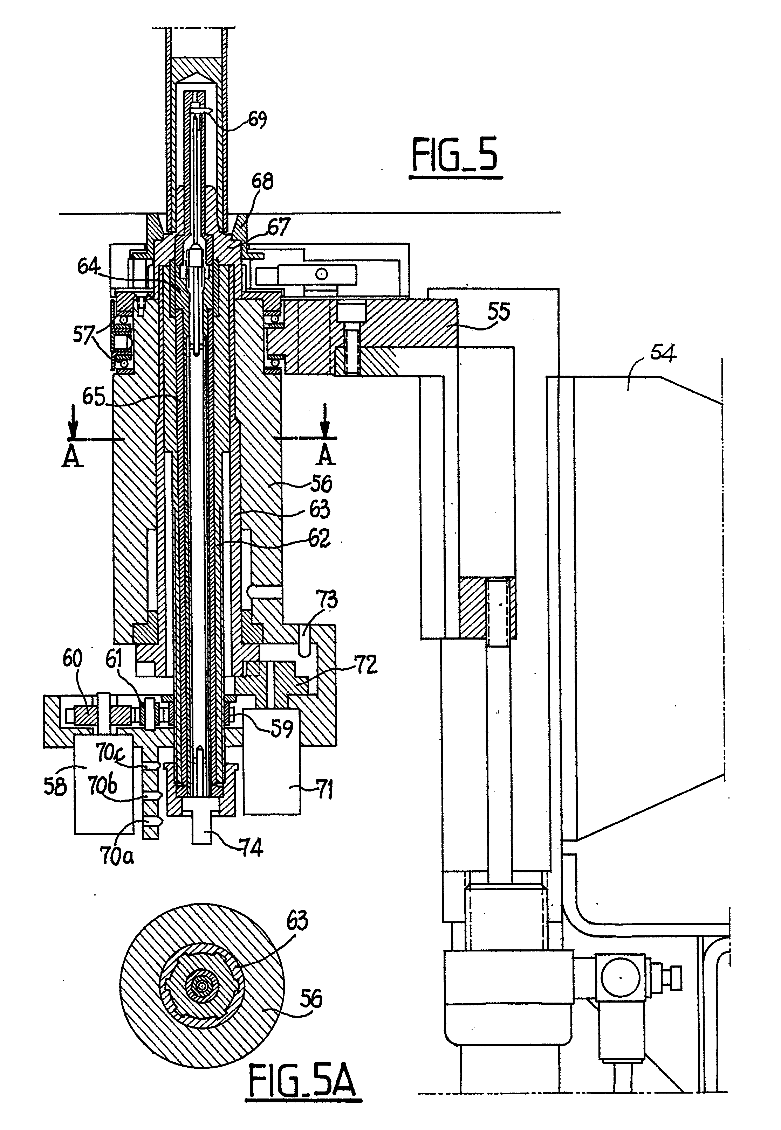

Sur la figure 5, on voit un dispositif permettant de réaliser le détensionnement de la paroi du bouchon en contact avec le tube du générateur de vapeur, en utilisant une torche de soudage. après perçage et réalésage du bouchon comme il a été expliqué plus haut.

La figure 5 est un schéma de principe montrant le dispositif de détensionnement réalisé sous la forme d'une torche de soudage constituée par une tige en un métal bon conducteur tel que le laiton portant à son extrémité une électrode de tungstène 69 de direc tion radiale. La torche est portée par un dispositif 54 permettant de la déplacer dans la direction verticale vers le haut ou vers le bas pour réaliser l'accostage ou le dégagement de la torche. Un tel dispositif qui peut être placé à l'intérieur de la boîte à eau d'un générateur de vapeur pour introduire un outil à l'intérieur d'un tube du générateur de vapeur est connu de la technique et ne sera pas décrit en détail.

Le dispositif 54 porte un moyen de déplacement vertical 55 sur lequel un bâti 56 est monté flottant, par l'intermédiaire d'un ensemble 57 constitué par des paliers et des butées à billes. Le bâti 56 porte un moteur de translation 58 qui entraîne un écrou 59, par l'intermédiaire de pignons 60 et 61. Un arbre fileté 62 est en prise avec l'écrou 59 pour assurer son déplacement axial à l'intérieur d'un arbre rainuré 63 solidaire du bâti 56.

La torche de soudage 64 est fixée à l'intérieur de l'arbre fileté 62, avec interposition d'un fourreau 65 en un matériau isolant tel que la stumatite. L'ensemble des pièces 62, 64 et 65 est mobile en translation axiale.

Le centrage de la torche 64 dans l'axe du bouchon 3 est assuré par un centreur 67 sur lequel est fixée une butée d'appui 68 sur la plaque tubulaire.

L'électrode 69 de la torche 64 est fixée à son extrémité supérieure venant à l'intérieur du bouchon 3, en position de service.

Trois détecteurs 70a, 70b et 70c assurent l'arrêt en fin de course de la torche. Le détecteur 70a correspond à une position de stockage de l'électrode dans laquelle celle-ci est protégée lors du centrage de la machine dans le bouchon 3.

Le détecteur 70b correspond à la fin de course de l'électrode en position basse, après détensionnement.

Le détecteur 70c correspond à la fin de course de l'électrode en position haute, avant détensionnement.

Le moteur d'orientation 71 entraîne l'arbre rainuré 63 par l'intermédiaire du pignon 72. Un détecteur 73 permet d'arrêter la rotation du moteur 71 quand l'arbre rainuré 63 a effectué une rotation de 60°.

L'arbre rainuré 63 entraîne en rotation l arbre fileté 62 et l'ensemble de la torche de détensionnement 64,65.

L'arrivée d'argon par l'intérieur de la torche de soudage est assurée par une buse 74. La torche de soudage 64 comporte à son extrémité des ouvertures de passage d'argon. L'alimentation en courant électrique est également assuré par la buse 74.

On effectue la fusion de la paroi du bouchon suivant une génératrice, pendant la descente de l'électrode grâce au moteur de translation 58.

On réalise la fusion du métal de la paroi du corps du bouchon, suivant six génératrices, ce qui réalise le détensionnement de ce bouchon.

Il serait possible également de réaliser une fusion suivant des zones hélicoïdales en combinant un mouvement de déplacement axial en translation de l'électrode et un mouvement de rotation continu.

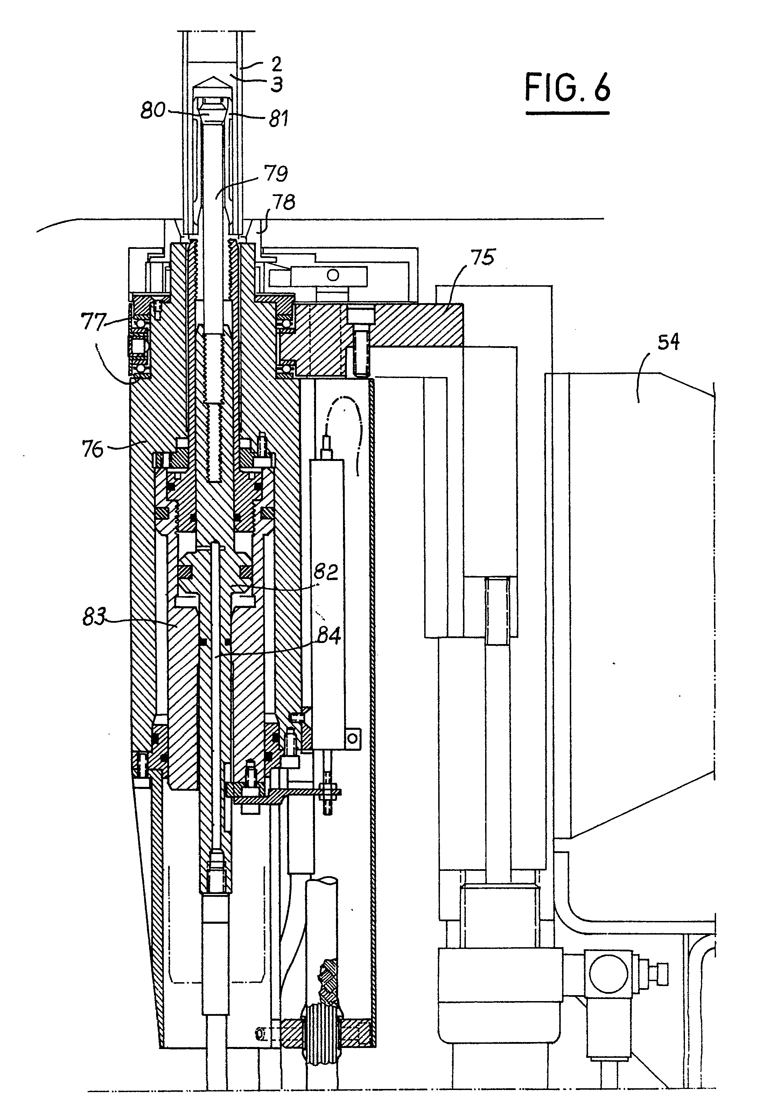

Lorsqu'on a réalisé le détensionnement de la paroi du corps du bouchon, on peut réaliser son extraction, en utilisant un dispositif tel que représenté sur la figure 6. Ce dispositif comporte un moyen de déplacement axial vers le haut ou vers le bas qui peut être le dispositif 54 représenté sur la figure 5.

L'outillage est relié au dispositif 54 par l'intermédiaire d'un support 75 sur lequel une douille 76 est montée rotative par l'intermédiaire de paliers à billes 77. La douille 76 est solidaire à son extrémité supérieure d'une butée d'appui 78 venant en contact avec la face inférieure de la plaque tubulaire lorsque l'outillage est en position d'extraction comme représenté sur la figure 6. L'outillage comporte une tige 79 dont la partie supérieure 80 constitue une olive engagée dans une chemise tubulaire 81 expansible radialement et qui peut être introduite dans le bouchon 3 après réalésage et détensionnement de ce bouchon.

La tige 79 est solidaire d'un piston 82 monté à l'intérieur d'un cylindre usiné dans un corps 83 fixé à l'intérieur de la douille 76.

Le vérin hydraulique constitué par le piston 82 et le cylindre dans lequel se déplace le piston est alimenté en fluide hydraulique par un canal 84 de direction axiale.

Lorsqu'on alimente le vérin en fluide hydraulique, le piston 82 et la tige 79 sont déplacés vers le bas, si bien que l'olive 80 réalise l'écartement des parties expansibles radialement de la douille 81 qui se trouve ainsi bloquée à l'intérieur du bouchon 3.

Après avoir réalisé l'expansion de l'outillage grâce au piston 82 d'un premier vérin, on réalise l'extraction du bouchon en utilisant le piston du vérin annulaire 83.

On peut extraire facilement le bouchon 3 du tube, la paroi de ce bouchon étant détensionnée et n'exerçant plus de contraintes radiales sur la paroi intérieure du tube.

On peut ainsi effectuer l'extraction du bouchon sans endommager la surface intérieure du tube 2.

On pourrait également réaliser l'extraction en utilisant une tige ayant une extrémité de forme oblongue introduite dans une ouverture de forme correspondante usinée par étincelage dans le fond du bouchon.

En tournant la tige après lui avoir fait traverser l'ouverture du fond du bouchon, on peut réaliser l'extraction en tirant sur la tige grâce à un moyen approprié tel qu'un vérin.

Dans tous les cas, l'extraction peut être réalisée facilement, le bouchon étant détensionné sur une partie substantielle de sa longueur et en particulier dans sa partie expansée à l'intérieur du tube.

Il est bien évident qu'on peut imaginer d'autres modes de réalisation du procédé et des dispositifs pour sa mise en oeuvre, les différentes opérations pouvant être réalisées d'une manière différente de celle qui a été décrite.

Le procédé et les dispositifs suivant l'invention peuvent s'appliquer à tout type de bouchon d'obturation fixé dans un tube de générateur de vapeur.

## Revendications

1.- Procédé d'extraction d'un bouchon d'obturation (3) d'un tube (2) d'un générateur de vapeur comportant un corps tubulaire (4) fermé à l'une de ses extrémités par un fond (6) et une noix de serrage (7) insérable dans le corps (4), de manière à réaliser l'expansion diamétrale de ce corps (4) à l'intérieur du tube (2) et son application étanche sur la paroi interne du tube, la noix de serrage (7) restant en place dans le corps (4) du bouchon en position de service, caractérisé par le fait :
- qu'on effectue un réalésage du corps (4) du bouchon en direction de son fond (6), au moins jusqu'à une zone d'expansion du bouchon munie de moyens d'ancrage et un perçage de la noix de serrage (7) par usinage électrique, sur une partie substantielle de sa longueur,
- qu'on réalise le détensionnement de la paroi du corps (4) du bouchon à l'aide d'une torche de soudage introduite dans l'alésage réalésé par usinage électrique,
- et qu'on introduit un outil de préhension dans l'alésage réalisé par usinage électrique pour extraire du tube le corps du bouchon détensionné.

2.- Procédé d'extraction suivant la revendication 1, caractérisé par le fait qu'on effectue un perçage de la noix de serrage sur toute sa longueur axiale et qu'on réalise une avance de l'électrode d'usinage électrique jusqu'au voisinage du fond (6) du bouchon (3).

3.- Procédé d'extraction suivant la revendication 1, caractérisé par le fait qu'on réalise le perçage du fond (6) du bouchon (3) suivant un trou de forme oblongue et qu'on introduit un outil de préhension de forme correspondante fixé à l'extrémité d'une tige dans le trou de forme oblongue, qu'on tourne l'outil d'un certain angle et qu'on extrait le bouchon par traction sur la tige de l'outil.

4.- **Procédé d'extraction suivant la revendication 1,** fait qu'on réalise le détensionnement par fusion partielle de la paroi du corps (4) du bouchon (3) suivant une pluralité de génératrices de cette paroi.

5. - **Procédé d'extraction suivant la revendication 1,** fait qu'on réalise le détensionnement par fusion partielle de la paroi du corps (4) du bouchon (3) suivant une ligne hélicoïdale ayant pour axe l'axe du bouchon.

6.- Dispositif d'extraction d'un bouchon d'obturation (3) d'un tube de générateur de vapeur (2) comportant un corps tubulaire (4) fermé à l'une de ses extrémités par un fond (6) et une noix de serrage (7) insérable dans le corps (4) de manière à réaliser l'expansion diamétrale de ce corps à l'intérieur du tube et son application étanche sur la paroi interne du tube, la noix de serrage restant en place dans le corps du bouchon en position de service, caractérisé par le fait qu'il comporte un outil de réalésage et de perçage par usinage électrique fixé sur un bras (10) et comportant une électrode (26, 26a) d'usinage électrique reliée au bras (10) de manière que l'électrode puisse être placée dans l'alignement de l'axe d'un bouchon (3) à extraire, un dispositif (12, 15, 16, 17, 22) de déplacement axial de l'électrode (26, 26a) et un ensemble de centrage (36, 38) de l'électrode par rapport au bouchon à extraire comportant des moyens de fixation (38) expansibles diamétralement engageables dans des tubes (2) du générateur de vapeur voisins du tube dans lequel se trouve le bouchon (3) à extraire.

7.- Dispositif d'extraction suivant la revendication 6, caractérisé par le fait que l'électrode (26, 26a) est reliée à sa partie inférieure à un vibreur (25) par l'intermédiaire duquel l'électrode est reliée au dispositif de déplacement dans la direction axiale (12, 15, 16, 17, 22).

8.- Dispositif d'extraction suivant la revendication 7, caractérisé par le fait qu'il comporte un manchon tubulaire (32) de direction axiale solidaire du bras (10) à l'intérieur duquel l'électrode (26, 26a) est montée mobile dans la direction axiale, le dispositif de centrage (36, 38) étant porté par un ensemble (35) monté coulissant dans la direction axiale sur le manchon (32) et sur un piston (34) solidaire du manchon (32) et monté à l'intérieur d'une chambre ménagée dans l'ensemble (35) de manière à constituer un vérin de déplacement axial du dispositif de centrage (36, 38).

9.- Dispositif d'extraction suivant la revendication 8, caractérisé par le fait que l'électrode (26) est reliée à son extrémité opposée à son extrémité de travail (26a) à une pièce de contact électrique (44) solidaire du vibreur (25) et comportant un canal (45) d'alimentation en eau de l'électrode (26, 26a) ayant un corps allongé de forme tubulaire.

10.- Dispositif suivant la revendication 9, caractérisé par le fait que l'électrode (26, 26a) est disposée à l'intérieur d'un manchon isolant électrique et thermique (49) fixé dans le manchon tubulaire (32) sur une partie de la longueur de l'électrode et relié à la pièce de contact (44) par l'intermédiaire d'un soufflet (48).

11.- **Dispositif d'extraction suivant la revendication 6,** le fait que le dispositif de déplacement axial de l'électrode (26, 26a) est constitué par un moteur (12) entraînant en rotation une tige filetée (17) de direction axiale sur laquelle est engagé un écrou (22) solidaire du vibreur (25).

12. - **Dispositif d'extraction suivant la revendication 6,** le fait que le dispositif de centrage (36, 38) comporte un plateau (36) portant au moins deux dispositifs de fixation à expansion radiale (38) monté rotatif autour de l'axe de l'électrode (26, 26a) sur l'ensemble (35).

13. - **Dispositif d'extraction suivant la revendication 6,** le fait qu'il comporte un moyen de détensionnement constitué par une torche (62) portant une électrode (69), des moyens (58, 59) de déplacement de la torche (64) dans la direction axiale des tubes, des moyens (71, 72) de déplacement de la torche en rotation autour de son axe et un dispositif (54) d'accostage et de dégagement de la torche par rapport à un tube (2) muni d'un bouchon (3).

14.- Dispositif d'extraction suivant la revendication 13, caractérisé par le fait que le dispositif de déplacement en rotation (71, 72) assure un déplacement angulaire d'amplitude déterminée de l'électrode.

15. - **Dispositif d'extraction suivant la revendication 13,** par le fait que le moyen de détensionnement comporte une pièce tubulaire (65) en matériau isolant disposée autour de la torche (64).

16. - Dispositif d'extraction **suivant la revendication 6,** caractérisé par le fait qu'il comporte un outil de préhension du bouchon porté par un moyen (54) de déplacement dans la direction axiale des tubes du générateur de vapeur, comprenant une chemise expansible radialement (81) dont le diamètre est inférieur au diamètre intérieur du corps du bouchon et une tige (79) solidaire d'un piston (82) comportant, à son extrémité opposée au piston (82), une olive (80) d'expansion radiale de la douille (81), le piston (82) étant monté, a l'intérieur d'une chambre ménagée dans un corps solidaire du dispositif de déplacement axial (54) de manière à constituer un vérin d'actionnement de la tige (79) et de l'olive (80).

17. - Dispositif d'extraction selon la revendication 16, caractérisé par le fait qu'il comporte un outil de préhension qui est relié au piston interne (82) d'un vérin annulaire pour réaliser son expansion et au piston externe (83) de ce vérin annulaire pour réaliser l'extraction du bouchon.

FIG.1

FIG.2

FIG.3

# FIG. 4

FIG_5

FIG.5A

FIG. 6

Office européen
des brevets

**RAPPORT DE RECHERCHE EUROPEENNE**

Numero de la demande

EP    90 40 0883

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | GB-A-2185427 (WESTINGHOUSE)<br>* abrégé; figures *<br>--- | 1, 2, 6, 12 | B23P19/02 |
| A | EP-A-292183 (WESTINGHOUSE)<br>* abrégé; figures *<br>--- | 1, 4-6, 13, 15, 16 | |
| A | US-A-4476368 (CAMMANN)<br>* colonne 1, ligne 1 - colonne 2, ligne 65 *<br>--- | 1, 6-11 | |
| A | DE-A-3447870 (AGIE LOSONE)<br>----- | 1, 6-11 | |

| | DOMAINES TECHNIQUES RECHERCHES (Int. Cl.5 ) |
|---|---|
| | B23P<br>F22B<br>B23H<br>B25B |

**Le présent rapport a été établi pour toutes les revendications**

| Lieu de la recherche | Date d'achèvement de la recherche | Examinateur |
|---|---|---|
| LA HAYE | 19 JUIN 1990 | RIS M. |